# EUROPEAN PATENT APPLICATION

(11) **EP 2 369 661 A1**
(43) Date of publication of application: **28.09.2011**
(21) Application number: 09835089.5
(22) Date of filing: 22.12.2009
(51) Int. Cl.: H01M 4/525, C01G 51/00, C01G 53/00, H01M 4/505

(54) **PLATE-SHAPED PARTICLES FOR POSITIVE ELECTRODE ACTIVE MATERIAL OF LITHIUM SECONDARY BATTERIES, AND LITHIUM SECONDARY BATTERIES**

(30) Priority: 24.12.2008 JP 2008326997; 17.03.2009 JP 2009064862; 10.06.2009 JP 2009138984; 21.08.2009 JP 2009191677; 09.10.2009 JP 2009235027
(71) Applicant: NGK Insulators, Ltd., Nagoya-shi, Aichi 467-8530 (JP)
(72) Inventor: SUGIURA, Ryuta, Nagoya-shi Aichi 467-8530 (JP); KOBAYASHI, Nobuyuki, Nagoya-shi Aichi 467-8530 (JP); YOKOYAMA, Shohei, Nagoya-shi Aichi 467-8530 (JP); NANATAKI, Tsutomu, Nagoya-shi Aichi 467-8530 (JP)
(74) Representative: Paget, Hugh Charles Edward
(86) International application number: PCT/JP2009/071833
(87) International publication number: WO 2010/074299

(57) **Abstract**

By exposing the crystal plane (a plane other than the (003) plane: e.g., the (101) plane and (104) plane) through which lithium ions are favorably intercalated and deintercalated, more to an electrolyte, characteristics such as cell capacity is improved. The present invention relates a plate-like particle for a lithium secondary battery cathode active material. The particle has a layered rock salt structure. The (003) plane is oriented in a direction intersecting a particle plate surface. The porosity is 10% or less. The ratio of an observed surface area (β) determined from a measured value of a BET specific surface area to a virtual surface area (α) of the particle which is defined by the planar shape and thickness of the particle on the assumption that the plate surface is smooth, β/α is 3 or more and 10 or less

## Description

### Technical Field

The present invention relates to a plate-like particle for cathode active material having a layered rock salt structure for a lithium secondary battery (the definition of a plate-like particle will be described later) and a lithium secondary battery having a positive electrode which includes the above-mentioned plate-like particle.

### Background Art

A cobalt-based cathode active material is widely used as a material for producing a positive electrode of a lithium secondary battery (may be referred to as a lithium ion secondary cell). The cobalt-based cathode active material (typically, LiCoO₂) has a so-called α-NaFeO₂ type layered rock salt structure. In the cobalt-based cathode active material, intercalation and deintercalation of lithium ions (Li⁺) occur through a crystal plane other than the (003) plane (e.g., the (101) plane or the (104) plane). Through such intercalation and deintercalation of lithium ions, charge and discharge are carried out.

### Summary of the Invention

A cathode active material of this kind for a cell brings about improvement in characteristics such as cell capacity by means of exposure of the crystal plane through which lithium ions are favorably intercalated and deintercalated (the plane other than the (003) plane; for example, the (101) plane or the (104) plane) as much extent as possible to an electrolyte. The present invention has been conceived to solve such a problem.

The plate-like particle for cathode active material for a lithium secondary battery according to the present invention has a layered rock salt structure and a porosity of 10% or less, the (003) plane is oriented so as to intersect the plate surface of the particle (the definition of the plate surface will be described later). Porosity falls preferably within a range of 3 to 10%. Porosity less than 3% is unpreferable for the following reason: due to the volume expansion-contraction associated with charge-discharge, concentration of stress occurs at a boundary between the domains whose crystal orientations are different in the particle or the film. This causes cracking then capacity is apt to be low. On the other hand, porosity more than 10% is unpreferable because charge-discharge capacity per volume decreses.

Specifically, for example, the particle is formed such that a plane other than the (003) plane (e.g., (104) plane) is oriented in parallel with the plate surface. Regarding the degree of orientation in this case, preferably, the ratio of intensity of diffraction by the (003) plane to intensity of diffraction by the (104) plane, [003]/[104], as obtained by X-ray diffraction is 1 or less. Thus, the deintercalation of lithium ions is facilitated, resulting in a remarkable improvement in charge-discharge characteristics.

However, when the ratio [003]/[104] is less than 0.005, the cycle characteristic deteriorates. Conceivably, this is because, when the degree of orientation is excessively high (i.e., crystals are oriented to an excessively high degree), a change in the volume of crystal associated with intercalation and deintercalation of lithium ions causes the particles and the film to be apt to break (the specifics of the reason for the deterioration in cycle characteristic are not clear).

"Layered rock salt structure" refers to a crystal structure in which lithium layers and layers of a transition metal other than lithium are arranged in alternating layers with an oxygen layer therebetween; i.e., a crystal structure in which transition metal ion layers and lithium layers are arranged in alternating layers via oxide ions (typically, α-NaFeO₂ type structure: structure in which a transition metal and lithium are arrayed orderly in the direction of the [111] axis of cubic rock salt type structure). "The (104) plane is oriented in parallel with the plate surface" can be rephrased as: the (104) plane is oriented such that the [104] axis, which is normal to the (104) plane, is in parallel with the direction of the normal to the plate surface.

The above-mentioned characteristic can be rephrased as: in the plate-like particle for a lithium secondary battery cathode active material of the present invention, the [003] axis in the layered rock salt structure is in a direction which intersects the normal to the plate surface of the particle. That is, the particle is formed such that a crystal axis (e.g., the [104] axis) which intersects the [003] axis is in a direction orthogonal to the plate surface.

"Plate-like particle" refers to a particle whose external shape is plate-like. The concept of "plate-like" is apparent under social convention without need of particular description thereof in the present specification. However, if the description were to be added, "plate-like" would be defined, for example, as follows.

Namely, "plate-like" refers to a state in which, when a particle which is placed on a horizontal surface (a surface orthogonal to the vertical direction, along which gravity acts) stably (in a manner as not to further fall down even upon subjection to an external impact (excluding such a strong impact as to cause the particle to fly away from the horizontal surface)) is cut by a first plane and a second plane which are orthogonal to the horizontal surface (the first plane and the second plane intersect each other, typically at right angles), and the sections of the particle are observed, a dimension along the width direction (the dimension is referred to as the "width" of the particle), which is along the horizontal surface (in parallel with the horizontal surface or at an angle of α degrees (0 < α < 45) with respect to the horizontal surface), is greater than a dimension along the thickness direction (the dimension is referred to as the "thickness" of the particle), which is orthogonal to the width direction. The above-mentioned "thickness" does not include a gap between the horizontal surface and the particle.

The plate-like particle of the present invention is usually formed in a flat plate-like form. "Flat plate-like form" refers to a state in which, when a particle is placed stably on a horizontal surface, the height of a gap formed between the horizontal surface and the particle is less than the thickness of the particle. Since a plate-like particle of this kind is not usually curved to an extent greater than the state, the above-mentioned definition is appropriate for the plate-like particle of the present invention.

In a state in which a particle is placed stably on a horizontal surface, the thickness direction is not necessarily parallel with the vertical direction. This will be discussed on the assumption that the sectional shape of particle placed stably on a horizontal surface, as cut by the first plane or the second plane, should be classified into the closest one among (1) rectangular shape, (2) diamond shape, and (3) elliptic shape. When the sectional shape of the particle is close to (1) rectangular shape, the width direction is parallel with the horizontal surface in the above-mentioned state, and the thickness direction is parallel with the vertical direction in the above-mentioned state.

Meanwhile, when the sectional shape of the particle is (2) diamond shape or (3) elliptic shape, the width direction may form some angle (45 degrees or less; typically, about a few degrees to about 20 degrees) with respect to the horizontal surface. In this case, the width direction is a direction which connects the two most distant points on the outline of the section (this definition is not appropriate for the case of (1) rectangular shape, since the direction according thereto is along a diagonal of the rectangular shape).

The "plate surface" of a particle refers to a surface which faces, in a state in which the particle is placed stably on a horizontal surface, the horizontal surface, or a surface which faces an imaginary plane located above the particle as viewed from the horizontal surface and being parallel with the horizontal surface. Since the "plate surface" of a particle is the widest surface on the plate-like particle, the "plate surface" may be referred to as the "principal surface." A surface which intersects (typically, at right angles) the plate surface (principal surface); i.e., a surface which intersects the plate surface direction (or in-plane direction), which is perpendicular to the thickness direction, is referred to as an "end surface," since the surface arises at an edge when the particle in a state of being stably placed on the horizontal surface is viewed in plane (when the particle in a state of being stably placed on the horizontal surface is viewed from above with respect to the vertical direction).

Nevertheless, in many cases, the plate-like particle for a lithium secondary battery cathode active material of the present invention is formed such that the sectional shape of the particle is close to (1) rectangular shape. Thus, in the plate-like particle for a lithium secondary battery cathode active material of the present invention, the thickness direction may be said to be parallel with the vertical direction in a state in which the particle is placed stably on a horizontal surface. Similarly, in the plate-like particle for a lithium secondary battery cathode active material of the present invention, the "plate surface" of the particle may be said to be a surface orthogonal to the thickness direction.

The particle may be formed to a thickness of 100 µm or less (e.g., 20 J.1m or less).

The lithium secondary battery of the present invention includes a positive electrode which contains, as a cathode active material, the plate-like particles for cathode active material of the present invention; a negative electrode which contains, as an anode active material, a carbonaceous material or a lithium-occluding material; and an electrolyte provided so as to intervene between the positive electrode and the negative electrode.

In formation of a positive electrode of a lithium secondary battery, for example, the plate-like particles for cathode active material are dispersed in a binder so as to form a cathode active material layer. A laminate of the cathode active material layer and a predetermined cathode collector serves as the positive electrode. That is, in this case, the positive electrode is formed by stacking the cathode active material layer, which contains the plate-like particles, on the cathode collector.

The present invention is characterized in that the plate-like particle for a lithium secondary battery having the above-mentioned structure has the following structure: the ratio of an observed surface area (β) determined from a measured value of a BET specific surface area to a virtual surface area (α) of the particle which is defined by the planar shape and thickness of the particle on the assumption that the plate surface is smooth, β/α is 3 or more and 10 or less.

The plate-like particle for cathode active material for a lithium secondary battery cathode active material of the present invention is formed such that so-called "uniaxial orientation" is attained. Specifically, the particle is formed such that the (h'k'l') planes different from a (hkl) plane, which is oriented in parallel with the plate surface, are oriented in a plurality of directions. In other word, in the plate-like particle, the [hkl] and [h'k'l'] axes are present such that, while the [hkl] axis (e.g., the [104] axis) is oriented in a fixed direction (in the thickness direction) at all times, the [h'k'l'] axes (e.g., the [003] axes) are oriented in such a manner as to revolve about the [hkl] axis.

In this case, the plate-like particles have the same crystal axis [hkl] in the plate surface. Meanwhile, as for the plate surface direction (in-plane direction) perpendicular to the thickness direction, the [h'k'l'] axes are oriented in a plurality of (various; i.e., random) directions. In other words, the plate-like particle is in a state in which, as viewed in plane, a large number of regions are arrayed two-dimensionally, the [h'k'l'] axis is oriented in the same direction in each region, and the adjacent regions differ in direction in which the [h'k'l'] axes are oriented.

Thus, there is restrained the occurrence of cracking in the particle and the film due to a change in the volume of crystal associated with intercalation and deintercalation of lithium ions. Particularly, at a relatively large thickness (e.g., 2 µm to 100 µm, preferably 5 µm to 50 µm, more preferably 5 µm to 20 µm), the effect of restraining the occurrence of cracking is of particular note. The detailed reason for this has not been rendered clear, but is assumed as follows.

A cathode active material having a layered rock salt structure has different coefficients of volume expansion-contraction for crystal orientations in intercalation and deintercalation of lithium ions. Thus, by means of two-dimensionally dividing the plate-like particle into a plurality of regions with different in-plane orientations while exposing the same crystal plane (e.g., the (104) plane) at the plate surface, stress stemming from volume expansion can be absorbed at boundary portions, and the individual regions can be expanded or contracted so as to reduce stress. As a result, while intercalation and deintercalation of lithium ions are activated, the occurrence of cracking in the particle can be restrained.

Such a structure can be confirmed by means of an X-ray diffractometer, a transmission electron microscope, or the like. For example, such a structure can be confirmed by means of X-ray diffraction as follows: a diffraction pattern appearing on a pole figure is not spot-like, but ring-like.

Preferably, the size of the individual regions is such that a length along the in-plane direction is 0.5 µm to 20 µm. When the length is in excess of 20 µm, cracking is apt to occur in the region. When the length is less than 0.5 µm, boundary portions of the regions, at which boundary portions lithium ions encounter difficulty in moving, increase, resulting in deterioration in output characteristics.

The plate-like particle or the cathode active material film can assume a multilayered structure (a structure in which a plurality of layers are stacked together in the thickness direction). In this case, each of the layers may have the above-mentioned state of orientation, or at least the surface layer (a layer having the plate surface) may have the above-mentioned state of orientation.

In the plate-like particle for cathode active material for a lithium secondary battery according to the present invention, the (003) plane is oriented so as to intersect the plate surface. In addition, in the plate-like particle for a lithium secondary battery according to the present invention, when the above-mentioned ratio β/α is 3 or more, asperity which increases the surface area contributing to the intercalation and deintercalation of lithium ions is formed on the plate surface. Thereby, the crystal plane through which lithium ions are favorably intercalated and deintercalated, exposes more to an electrolyte, and thus characteristics such as cell capacity is improved.

It is believed that, when the above-mentioned ratio β/α is 3 or more, the effect of raising the proportion of the surface area contributing to the intercalation and deintercalation of lithium ions through orientation and the effect of raising the particle surface area through the formation of the asperity function in a synergistic manner. Meanwhile, when the above-mentioned ratio β/α exceed 10, the characteristics deteriorate. It is believed that this is because the vertical interval of the asperity becomes too large or the asperity becomes too fine, and thus an electrolyte encounters difficulty in diffusion or the electric resistance to an electronic conduction becomes high.

### Brief Description of the Drawings

FIG. is a 1A Sectional view of the schematic configuration of a lithium secondary battery according to an embodiment of the present invention.
FIG. 1B is an enlarged sectional view of a positive electrode shown in FIG. 1A.
FIG. 2A is an enlarged perspective view of a plate-like particle for cathode active material shown in FIG. 1.
FIG. 2B is an enlarged perspective view of a cathode active material particle of a comparative example.
FIG. 2C is an enlarged perspective view of a cathode active material particle of a comparative example.
FIG. 3A is a scanning electron micrograph showing the surface (plate surface) of the plate-like particle (LiCoO₂ particle) for cathode active material shown in FIG. 2A.
FIG. 3B is a scanning electron micrograph showing the cross section (polished) of the plate-like particle (LiCoO₂ particle) for cathode active material shown in FIG. 2A.
FIG. 4A is an enlarged perspective view of a plate-like particle for cathode active material shown in FIG. 2A.
FIG. 4B is an enlarged perspective view of a plate-like particle for cathode active material shown in FIG. 2A.
FIG. 5 is a sectional view of the structure of a modification of the positive electrode shown in FIG. 1B.

### Description of Embodiments

Preferred embodiments of the present invention will next be described by use of examples and comparative examples. The following description of the embodiments is nothing more than the specific description of mere example embodiments of the present invention to the possible extent in order to fulfill description requirements (descriptive requirement and enabling requirement) of specifications required by law. Thus, as will be described later, naturally, the present invention is not limited to the specific configurations of embodiments and examples to be described below. Modifications that can be made to the embodiments and examples are collectively described herein principally at the end, since insertion thereof into the description of the embodiments would disturb understanding of consistent description of the embodiments.

### <Configuration of lithium secondary battery>

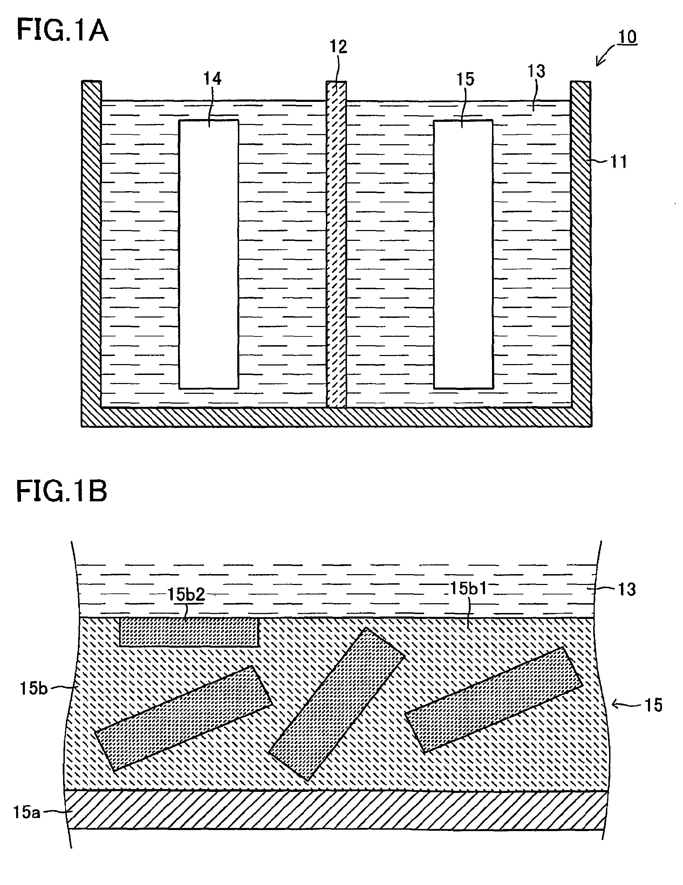

FIG. 1A is a sectional view of the schematic configuration of a lithium secondary battery 10 according to an embodiment of the present invention.

Referring to FIG. 1A, the lithium secondary battery 10 of the present embodiment is of a so-called liquid type and includes a cell casing 11, a separator 12, an electrolyte 13, a negative electrode 14, and a positive electrode 15.

The separator 12 is provided so as to halve the interior of the cell casing 11. The cell casing 11 accommodates the liquid electrolyte 13. The negative electrode 14 and the positive electrode 15 are provided within the cell casing 11 in such a manner as to face each other with the separator 12 located therebetween.

For example, a nonaqueous-solvent-based electrolytic solution prepared by dissolving an electrolyte salt, such as a lithium salt, in a nonaqueous solvent, such as an organic solvent, is preferably used as the electrolyte 13, in view of electrical characteristics and easy handlability. However, a polymer electrolyte, a gel electrolyte, an organic solid electrolyte, or an inorganic solid electrolyte can also be used as the electrolyte 13 without problems.

No particular limitation is imposed on a solvent for a nonaqueous electrolytic solution. Examples of the solvent include chain esters, such as dimethyl carbonate, diethyl carbonate, ethyl methyl carbonate, and methyl propione carbonate; cyclic esters having high dielectric constant, such as ethylene carbonate, propylene carbonate, butylene carbonate, and vinylene carbonate; and mixed solvents of a chain ester and a cyclic ester. A mixed solvent containing a chain ester serving as a main solvent with a cyclic ester is particularly suitable.

In preparation of a nonaqueous electrolytic solution, examples of an electrolyte salt to be dissolved in the above-mentioned solvent include LiClO₄, LiPF₆, LiBF₄, LiAsF₆, LiSbF₆, LiCF₃SO₃, LiC₄F₉SO₃, LiCF₃CO₂, Li₂C₂F₄(SO₃)₂, LiN(RfSO₂)(RfSO₂), LiC(RfSO₂)₃, LiCₙF₂ₙ₊₁SO₃(n≥2), and LiN(RfOSO₂)₂ [Rf and Rf' are fluoroalkyl groups]. They may be used singly or in combination of two or more species. Among the above-mentioned electrolyte salts, a fluorine-containing organic lithium salt having a carbon number of 2 or greater is particularly preferred. This is because the fluorine-containing organic lithium salt is high in anionic property and readily undergoes ionization, and is thus readily dissolvable in the above-mentioned solvent. No particular limitation is imposed on the concentration of electrolyte salt in a nonaqueous electrolytic solution. However, for example, the concentration is preferably 0.3 mol/L to 1.7 mol/L, more preferably 0.4 mo/lL to 1.5 mol/L.

Any anode active material may be used for the negative electrode 14, so long as the material can occlude and release lithium ions. For example, there are used carbonaceous materials, such as graphite, pyrolytic carbon, coke, glassy carbon, a sintered body of organic high polymer compound, mesocarbon microbeads, carbon fiber, and activated carbon. Also, metallic lithium or a lithium-occluding material such as an alloy which contains silicon, tin, indium, or the like; an oxide of silicon, tin, or the like which can perform charge and discharge at low electric potential near that at which lithium does; a nitride of lithium and cobalt such as Li_{2.6}Co_{0.4}N can be used as the anode active material. Further, a portion of graphite can be replaced with a metal which can be alloyed with lithium, or with an oxide. When graphite is used as the anode active material, voltage at full charge can be considered to be about 0.1 V (vs. lithium); thus, the electric potential of the positive electrode 15 can be conveniently calculated as a cell voltage plus 0.1 V. Therefore, since the electric potential of charge of the positive electrode 15 is readily controlled, graphite is preferred.

FIG. 1B is an enlarged sectional view of the positive electrode 15 shown in FIG. 1A. Referring to FIG. 1B, the positive electrode 15 includes a cathode collector 15a and a cathode active material layer 15b. The cathode active material layer 15b is composed of a binder 15b1 and plate-like particles 15b2 for cathode active material.

Since the basic configurations of the lithium secondary battery 10 and the positive electrode 15 (including materials used to form the cell casing 11, the separator 12, the electrolyte 13, the negative electrode 14, the cathode collector 15a, and the binder 15b1) shown in FIGS. 1A and 1 B are well known, detailed description thereof is omitted herein.

The plate-like particle 15b2 for cathode active material according to an embodiment of the present invention is a particle which contains cobalt and lithium and has a layered rock salt structure; more particularly, a LiCoO₂ particle, and is formed into a plate-like form having a porosity of 10% or less and a thickness of about 2µm or more (about 2 µm to 100 µm).

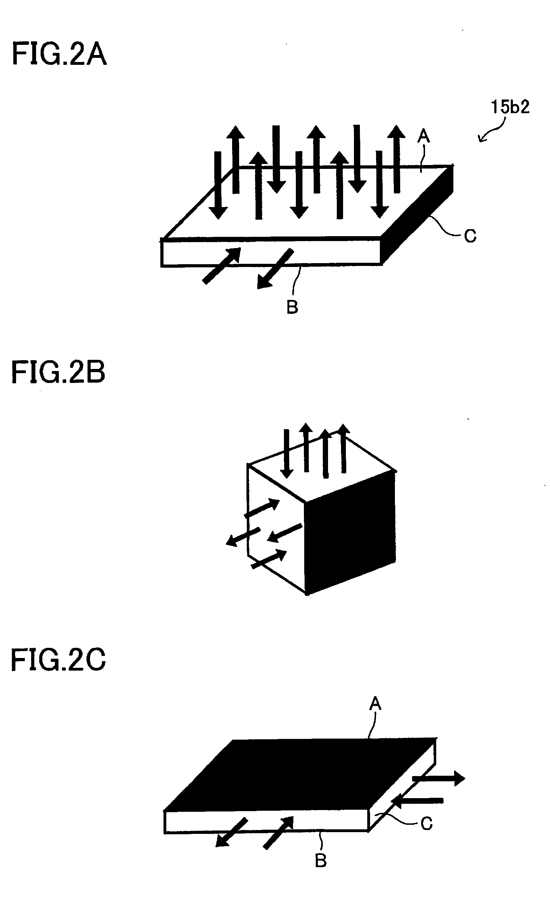

FIG. 2A is an enlarged perspective view of the plate-like particle 15b2 for cathode active material shown in FIG. 1. FIG. 2B and FIG. 2C are enlarged perspective views of a cathode active material particle according to comparative examples.

As shown in FIG. 2A, the plate-like particle 15b2 for cathode active material is formed such that the (003) plane is oriented so as to intersect the plate surfaces (upper surface A and lower surface B: hereinafter, the "upper surface A" and the "lower surface B" are referred to as the "plate surface A" and "plate surface B," respectively), which is a surface normal to the thickness direction (the vertical direction in the drawings).

That is, the plate-like particle 15b2 for cathode active material is formed such that the plane other than the (003) plane (e.g., the (104) plane) is oriented in parallel with the plate surfaces A or B of the particle.

In other words, the plate-like particle 15b2 for cathode active material is formed such that a plane other than the (003) plane (e.g., the (101) or (104) plane) is exposed at both of the plate surfaces A and B. Specifically, the plate-like particle 15b2 for cathode active material is formed such that the ratio of intensity of diffraction by the (003) plane to intensity of diffraction by the (104) plane, [003]/[104], as obtained by X-ray diffraction, is 0.005 or more and 1.0 or less. The (003) plane (colored black in the drawing) may be exposed at the end surfaces C, which intersects the plate surface direction (in-plane direction).

By contrast, the particle of a comparative (conventional) example shown in FIG. 2B is formed into an isotropic shape rather than a thin plate. The thin plate-like particle or active material film of a comparative (conventional) example shown in FIG. 2C is formed such that the (003) planes are exposed at both surfaces (plate surfaces A and B) located in the thickness direction of the particle.

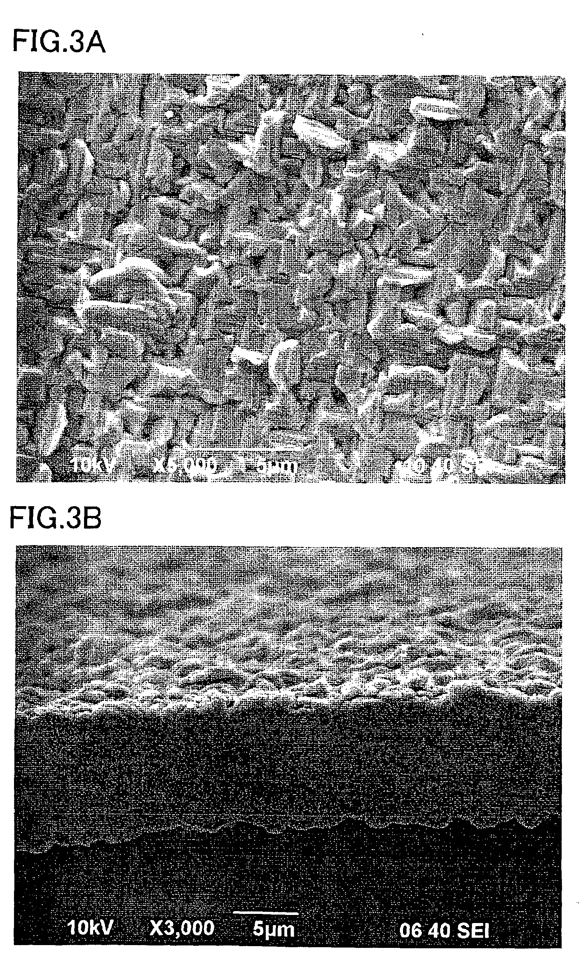

FIG. 3A is a SEM photograph showing a surface (the plate surface A or B in FIG. 2A) of the plate-like particle (LiCoO₂ particle) 15b2 for cathode active material shown in FIG. 2A. FIG. 3B is a SEM Photograph showing a cross section (chemically polished) of the plate-like particle (LiCoO₂ particle) 15b2 for cathode active material shown in FIG. 2A. As shown in FIG. 3A and FIG. 3B, asperity which increases the surface area contributing to the intercalation and deintercalation of lithium ions is formed on the plate surface (particularly, both plate surfaces A and B) of the plate-like particle 15b2 for cathode active material.

That is, the plate-like particle 15b2 for cathode active material has the following structure: the ratio of an observed surface area (β) determined from a measured value of a BET specific surface area to a virtual surface area (α) of the particle which is defined by the planar shape and thickness of the particle on the assumption that the plate surface is smooth, β/α is 3 or more and 10 or less.

In addition, as shown in FIG. 3B, the plate-like particle 15b2 for cathode active material according to the present embodiment has a very dense structure (porosity is 10% or less).

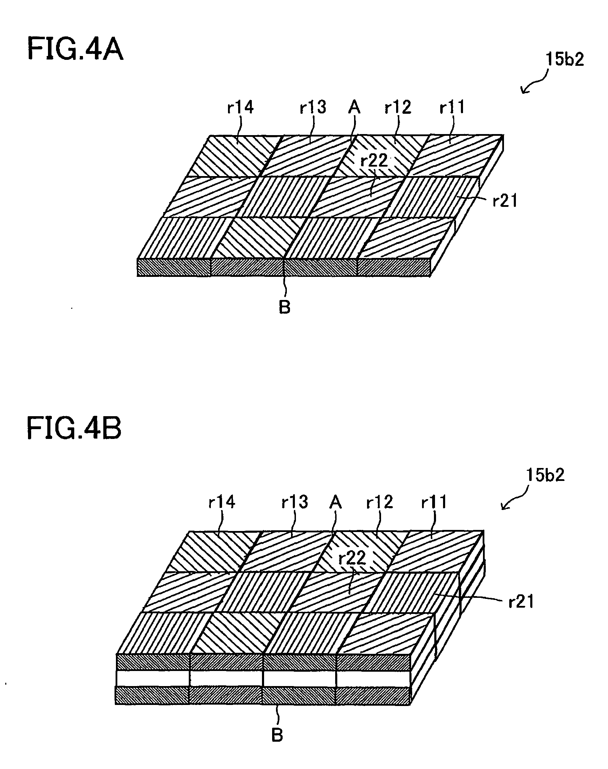

FIG. 4A and FIG. 4B are enlarged perspective views of a plate-like particle 15b2 for cathode active material shown in FIG. 2A. As shown in FIG. 4A, the plate-like particle 15b2 for cathode active material according to the present embodiment is formed such that so-called "uniaxial orientation" is attained.

That is, the plate-like particle 15b2 for cathode active material according to the present embodiment shown in FIG. 4A is formed such that the particular plane (e.g., the (104) plane) other than the (003) plane through which lithium ions are favorably intercalated and deintercalated is oriented in parallel with the plate surfaces A and B of the particle at all times and such that the other planes face random directions. In other words, the plate-like particle 15b2 for cathode active material has a structure divided into a plurality of regions r11, r12, r13, r14, ..., r21, r22, ...in which, while the above-mentioned particular plane is exposed at the plate surfaces A and B, the other planes face different directions.

In the regions r11, r12, r13, r14, ..., r21, r22, ..., while the [hkl] axes corresponding to the normals to the above-mentioned particular (hkl) plane are oriented in the same direction (the thickness direction; i.e., the vertical direction in the drawing), the [h'k'l'] axes corresponding to the normals to the other (h'k'l') planes are oriented in random directions. That is, the adjacent regions (e.g., r11 an r12) differ in the direction of the [h'k'l'] axis.

The plate-like particle 15b2 for cathode active material shown in FIG. 2A may, in some cases, have a multilayered structure (stacked structure) as shown in FIG. 4B instead of a monolayer structure as shown in FIG. 4A. In this case, at least a surface layer (top layer in the drawing) having the plate surface (upper surface) A and a surface layer (bottom layer in the drawing) having the plate surface (lower surface) B have the above-mentioned structure divided into the regions r11, r12, r13, r14, ..., r21, r22, ... (an intermediate layer between the top layer and the bottom layer in the drawing may be configured similarly; however, in this case, the layers differ in the above-mentioned [hkl] axis).

The above-mentioned "uniaxially oriented" state can be confirmed by means of one of the following two methods.

One or two of opposite plate surfaces of the plate-like particle were sliced off by means of FIB (focused ion beam) to obtain a piece(s) having a thickness of about 80 nm. The plate surface of the piece(s) was observed through a transmission electron microscope. In the selected-area electron diffraction image, 10 or more portions having the [104] axis oriented perpendicular to the plate surface were observed, and it was confirmed that, at these portions, orientation within the plate surface was randomized.

The plate-like particles were placed on a slide glass substrate in such a manner as to not overlap one another and such that the particle plate surfaces were in surface contact with the plate surface of the glass substrate. Specifically, a mixture prepared by adding plate-like particles (0.1 g) to ethanol (2 g) was subjected to dispersion for 30 minutes by means of an ultrasonic dispersing device (ultrasonic cleaner); and the resultant dispersion liquid was spin-coated at 2,000 rpm onto the glass substrate measuring 25 mm x 50 mm so as to place the plate-like particles on the glass substrate. Then, the particles placed on the glass substrate were transferred to an adhesive tape. The resultant tape was embedded in resin, followed by polishing for enabling observation of the polished cross-sectional surface of a plate-like particle. Finish polishing was carried out by means of a vibrating rotary polisher using colloidal silica (0.05 µm) as abrasive. The thus-prepared sample was subjected to crystal orientation analysis of the cross section of a single particle by an electron backscattered diffraction image process (EBSD). It was confirmed from the analysis that the particle plate surface was divided into a plurality of regions in which the [104] axes are perpendicular to the plate surface (i.e., the (104) planes are oriented along the plate surface), whereas crystal axes other than the [104] axes (crystal axes intersecting with the [104] axes) are oriented in random directions.

### <Outline of method for manufacturing plate-like particles for cathode active material>

The outline of method for manufacturing the plate-like particles 15b2 for cathode active material will be described below.

### 1. Preparation of material particles

For synthesizing a cathode active material LiMO₂ having a layered rock salt structure, particles of compounds of Li, Co, Ni, Mn, etc. are appropriately used as particle-form starting materials. Alternatively, a particle-form starting material having a composition of LiMO₂ (synthesized particles) may also be used.

Alternatively, there may be used particles prepared by mixing particles of compounds of Co, Ni, Mn, etc., excluding lithium compound, or particles having a composition of (Co,Ni,Mn)Oₓ. In this case, after a step of sintering a compact, the sintered compact and a lithium compound are reacted with each other, thereby yielding LiMO₂ (details will be described hereinbelow).

For the purpose of accelerating grain growth or compensating volatilization during sintering, a lithium compound may be added in an excess amount of 0.5 mol% to 30 mol%. Alternatively, for the purpose of accelerating grain growth, a low-melting-point oxide, such as bismuth oxide, or low-melting-point glass, such as borosilicate glass, may be added in an amount of 0.001 wt% to 30 wt%.

### 2. Forming step for material particles

Material particles are formed into a sheet-like self-standing compact having a thickness of 100 µm or less. "Self-standing" in "self-standing compact" is synonymous with "independent" in "independent sheet" to be mentioned later. Specifically, the "self-standing compact" is typically a compact which can maintain the form of a sheet-like compact by itself. The "self-standing compact" also encompasses a compact which is formed by affixing or film-forming material particles on a substrate and then separating the resultant compact from the substrate before or after sintering, even though the compact fails to maintain the form of a sheet-like compact by itself.

An employable method for forming a compact is, for example, a doctor blade process using a slurry which contains material particles. Alternatively, a drum drier can be used for formation of a compact; specifically, slurry which contains material is applied onto a heated drum, and then the dried material is scraped off with a scraper. A disk drier can also be used; specifically, slurry is applied onto a heated disk surface, and then the dried material is scraped off with a scraper. Also, hollow granular bodies obtained by appropriately setting conditions of a spray drier can be considered a sheet-like compact having curvature and thus can be preferably used as a compact. Further, an extruding process using a body which contains material particles can be used as a forming method for a compact.

When the doctor blade process is employed, the procedure may be as follows: slurry is applied onto a flexible plate (e.g., an organic polymer plate, such as a PET film); the applied slurry is dried and solidified into a compact; and the compact is separated from the plate, thereby yielding a green compact of plate-like polycrystalline particles. Slurry and body before forming may be prepared as follows: inorganic particles are dispersed in an appropriate dispersion medium, and then binder and plasticizer are added as appropriate. Preferably, slurry is prepared so as to have a viscosity of 500 cP to 4,000 cP and is defoamed under reduced pressure.

The thickness of a compact is preferably 50 µm or less, more preferably 20 µm or less. Preferably, the thickness of the compact is 2 µm or greater. When the thickness is 2 µm or greater, a self-standing sheet-like compact can be readily formed. Since the thickness of the sheet-like compact is substantially equal to the thickness of a plate-like particle, the thickness of the sheet-like compact is set as appropriate according to applications of the plate-like particles.

### 3. Step of sintering a compact

In the sintering step, a compact yielded in the forming step is placed on a setter, for example, as is (in a sheet state), followed by sintering. Alternatively, the sintering step may be performed as follows: the sheet-like compact is cut up or fragmentized as appropriate, and the resultant pieces are placed in a sheath, followed by sintering.

When material particles are unsynthesized mixed particles, in the sintering step, synthesis, sintering, and grain growth occur. In the present invention, since the compact assumes the form of a sheet having a thickness of 100 µm or less, grain growth in the thickness direction is limited. Thus, after grain growth progresses in the thickness direction of the compact until a single crystal grain is completed, grain growth progresses only in in-plane directions of the compact. At this time, particular crystal face which is energetically stable spreads in the sheet surface (plate surface). Thus, there is yielded a film-like sheet (self-standing film) in which particular crystal face is oriented in parallel with the sheet surface (plate surface).

When material particles are of LiMO₂, the (101) and (104) planes, which are crystal faces through which lithium ions are favorably intercalated and deintercalated, can be oriented so as to be exposed at the sheet surface (plate surface). When material particles do not contain lithium (e.g., material particles are of M₃O₄ having a spinel structure), the (h00) planes, which will become the (104) planes when reacting with a lithium compound to thereby yield LiMO₂, can be oriented so as to be exposed at the sheet surface (plate surface).

Preferably, the sintering temperature is 800°C to 1,350°C. When the temperature is lower than 800°C, grain growth becomes insufficient; thus, the degree of orientation becomes low. When the temperature is in excess of 1,350°C, decomposition and volatilization progress. Preferably, the sintering time falls within a range of 1 hour to 50 hours. When the time is shorter than one hour, the degree of orientation becomes low. When the time is longer than 50 hours, energy consumption becomes excessively large. The atmosphere of sintering is set as appropriate such that decomposition during sintering does not progress. In the case where volatilization of lithium progresses, preferably, a lithium atmosphere is established through disposition of lithium carbonate or the like within the same sheath. In the case where release of oxygen and reduction progress during sintering, preferably, sintering is carried out in an atmosphere having high partial pressure of oxygen.

### 4. Crushing step and lithium introduction step

The sintered sheet-like compact is placed on a mesh having a predetermined mesh size, and then a spatula is pressed against the sheet from above, whereby the sheet is crushed into a large number of plate-like particles. The crushing step may be performed after the lithium introduction step.

In the case where a sheet is formed from starting material particles which do not contain a lithium compound, and is then sintered for orientation, or plate-like particles are yielded through crushing of the sheet, the sheet or the plate-like particles are reacted with a lithium compound (lithium nitrate, lithium carbonate, etc.), thereby yielding a cathode active material film in which a crystal face of good intercalation and deintercalation is oriented so as to be exposed at the plate surface. For example, lithium is introduced by sprinkling lithium nitrate over the oriented sheet or particles such that the mole ratio between Li and M, Li/M, is 1 or higher, followed by heat treatment. Preferably, the heat treatment temperature is 600°C to 800°C. When the temperature is lower than 600°C, the reaction does not progress sufficiently. When the temperature is higher than 800°C, orientation deteriorates.

### <Specific example of method for manufacturing plate-like particles for cathode active material>

Specifically, the plate-like particles 15b2 for cathode active material having the above-mentioned structure are readily and reliably manufactured by the following manufacturing method.

### «Sheet formation step»

A green sheet which contains Co₃O₄ and Bi₂O₃ and has a thickness of 20 µm or less is formed. The green sheet is sintered at a temperature falling within a range of 900°C to 1,300°C for a predetermined time, thereby yielding an independent film-like sheet ("independent sheet" is synonymous with "self-standing film", i.e. film can be handled by itself after the sintering) in which the (h00) planes are oriented in parallel with the plate surface (the orientation may be referred to merely as "(h00) orientation") and which is composed of a large number of plate-like Co₃O₄ particles. In the course of the sintering, bismuth is removed from the sheet through volatilization, and Co₃O₄ is phase-transformed to CoO through reduction.

The "independent" sheet refers to a sheet which, after sintering, can be handled by itself independent of the other support member. That is, the "independent" sheet does not include a sheet which is fixedly attached to another support member (substrate or the like) through sintering and is thus integral with the support member (unseparable or difficult to be separated).

In the thus-formed green sheet in the form of a film, the amount of material present in the thickness direction is very small as compared with that in a particle plate surface direction; i.e., in an in-plane direction (a direction orthogonal to the thickness direction).

Thus, at the initial stage at which a plurality of particles are present in the thickness direction, grain growth progresses in random directions. As the material in the thickness direction is consumed with progress of grain growth, the direction of grain growth is limited to two-dimensional directions within the plane. Accordingly, grain growth in planar directions is reliably accelerated.

Particularly, by means of forming the green sheet to the smallest possible thickness (e.g., several µm or less) or accelerating grain growth to the greatest possible extent despite a relatively large thickness of about 100 µm (e.g., about 20 µm), grain growth in planar directions is more reliably accelerated.

At this time, only those particles whose crystal faces having the lowest surface energy are present within the plane of the green sheet selectively undergo in-plane flat (plate-like) grain growth. As a result, sintering the sheet yields plate-like crystal grains of CoO which have high aspect ratio and in which particular crystal faces (herein, the (h00) planes) are oriented in parallel with the plate surfaces of the grains.

In the process of temperature lowering, CoO is oxidized into Co₃O₄. At this time, the orientation of CoO is transferred, thereby yielding plate-like crystal grains of Co₃O₄ in which particular crystal faces (herein, the (h00) planes) are oriented in parallel with the plate surfaces of the grains.

In the oxidation from CoO to Co₃O₄, the degree of orientation is apt to deteriorate for the following reason: since CoO and Co₃O₄ differ greatly in crystal structure and Co-O interatomic distance, oxidation; i.e., insertion of oxygen atoms, is apt to be accompanied by a disturbance of crystal structure. Thus, preferably, conditions are selected as appropriate so as to avoid deterioration in the degree of orientation to the greatest possible extent. For example, reducing the temperature-lowering rate, holding at a predetermined temperature, and reducing the partial pressure of oxygen are preferred.

Thus, sintering such a green sheet yields a self-standing film formed as follows: a large number of thin plate-like grains in which particular crystal faces are oriented in parallel with the plate surfaces of the grains are joined together at grain boundaries in planar directions (refer to Japanese Patent Application No. 2007-283184 filed by the applicant of the present invention). That is, there is formed a self-standing film in which the number of crystal grains in the thickness direction is substantially one. The meaning of "the number of crystal grains in the thickness direction is substantially one" does not exclude a state in which portions (e.g., end portions) of in-plane adjacent crystal grains overlie each other in the thickness direction. The self-standing film can become a dense ceramic sheet in which a large number of thin plate-like grains as mentioned above are joined together without clearance therebetween.

### «Crushing step»

The film-like sheet (self-standing sheet) yielded in the above-mentioned sheet formation step is in such a state that the sheet is apt to break at grain boundaries. Thus, the film-like sheet yielded in the above-mentioned sheet formation step is placed on a mesh having a predetermined mesh size, and then a spatula is pressed against the sheet from above, whereby the sheet is crushed into a large number of Co₃O₄ particles.

### «Lithium introduction step»

The (h00)-oriented (the meaning of "(h00) orientation" is mentioned above) Co₃O₄ particles yielded in the above-mentioned crushing step and Li₂CO₃ are mixed. The resultant mixture is heated for a predetermined time, whereby lithium is introduced into the Co₃O₄ particles. Thus, there is yielded (104)-oriented LiCoO₂; i.e., the plate-like particles 15b2 for cathode active material.

The crushing step may be carried out after the lithium introduction step.

In addition to lithium carbonate, there can be used as a lithium source for lithium introduction, for example, various lithium salts, such as lithium nitrate, lithium acetate, lithium chloride, lithium oxalate, and lithium citrate; and lithium alkoxides, such as lithium methoxide and lithium ethoxide.

For enhancement of orientation of LiCoO₂ particles, conditions in lithium introduction; specifically, mixing ratio, heating temperature, heating time, atmosphere, etc., must be set as appropriate in consideration of melting point, decomposition temperature, reactivity, etc. of a material to be used as a lithium source.

For example, when the mixture of (h00)-oriented Co₃O₄ particles and a lithium source react with each other in a very active state, the orientation of Co₃O₄ particles may be disturbed, which is undesirable. The active state means, for example, the following state: the lithium source becomes excessive in amount and becomes a liquid state, and not only are intercalated lithium ions into crystals of Co₃O₄ particles, but also Co₃O₄ particles are dissolved and re-precipitated in the liquid of the lithium source.

In addition, by crushing the LiCoO₂ film fabricated by the lithium introduction to the film-like sheet (self-standing film) obtained by the above-mentioned sheet formation step without the crushing step, the plate-like particles 15b2 for cathode active material, which are (104)-oriented LiCoO₂ membrane, can be obtained.

### <Examples>

Next will be described in detail specific examples of the above-mentioned manufacturing methods, and the film or particles manufactured by the methods, along with the results of evaluation thereof.

### [Example 1]

### «Manufacturing method»

First, a slurry was prepared by the following method: A Co₃O₄ powder (particle size: 1 µm to 5 µm; product of Seido Chemical Industry Co., Ltd.) was pulverized, yielding Co₃O₄ particles (particle size: 0.3 µm); Bi₂O₃ (particle size: 0.3 µm; product of Taiyo Koko Co., Ltd.) was added in an amount of 20 wt.% to the Co₃O₄ particles; and the resultant mixture (100 parts by weight), a dispersion medium (toluene : isopropanol = 1 : 1) (100 parts by weight), a binder (polyvinyl butyral: product No. BM-2; product of Sekisui Chemical Co. Ltd.) (10 parts by weight), a plasticizer (DOP: Di (2-ethylhexyl) phthalate; product of Kurogane Kasei Co., Ltd.) (4 parts by weight), and a dispersant (product name RHEODOL SP-O30, product of Kao Corp.) (2 parts by weight) were mixed. The resultant mixture was stirred under reduced pressure for defoaming and was prepared to a viscosity of 4,000 cP. The viscosity was measured by means of an LVT-type viscometer, a product of Brookfield Co., Ltd.

The thus-prepared slurry was formed into a sheet on a PET film by the doctor blade process such that the thickness of the sheet was 10 µm as measured after drying.

A 70 mm square piece was cut out from the sheet-like compact separated from the PET film by means of a cutter; the piece was placed at the center of a setter (dimensions: 90 mm square x 1 mm high) made of zirconia and embossed in such a manner as to have a protrusion size of 300 µm; sintering was performed at 1,200°C for 5 hours; temperature was lowered at a rate of 50°C/h; and a portion of the piece which was not fused to the setter was taken out.

A Li₂CO₃ powder (product of Kanto Chemical Co., Inc.) was sprinkled over the thus-yielded Co₃O₄ ceramic sheet such that the ratio Li/Co became 1.0. The thus-prepared ceramic sheet was thermally treated within a crucible at 750°C for 3 hours, thereby yielding an LiCoO₂ ceramic sheet (self-standing film) having a thickness of 10 µm.

The LiCoO₂ ceramic sheet was placed on a polyester mesh having an average opening diameter of 50 µm, and then a spatula was lightly pressed against the ceramic sheet so as to cause the ceramic sheet to pass through the mesh, thereby crushing the ceramic sheet into powdery LiCoO₂ (corresponding to the plate-like particles 15b2 for cathode active material).

### «Results of evaluation»

The result of observation of the surface (plate surface) of the plate-like particle for cathode active material according to Example 1 by means of a scanning electron microscope was similar to FIG. 3A and FIG. 3B. For the samples in FIG. 3A and FIG. 3B, a LiNO₃ powder (product of Kanto Chemical Co., Inc.) was used for the introduction of lithium, and the heat-treatment was carried out at 750°C for 3 hours.

The thickness of the plate-like particle was measured by the following method: first, a large number of the plate-like particles were placed on a slide glass substrate in such a manner as to not overlap one another and such that the particle plate surfaces were in surface contact with the plate surface of the glass substrate. Specifically, a mixture prepared by adding the plate-like particles (0.1 g) to ethanol (2 g) was subjected to dispersion for 30 minutes by means of an ultrasonic dispersing device (ultrasonic cleaner); and the resultant dispersion liquid was spin-coated at 2,000 rpm onto the glass substrate measuring 25 mm x 50 mm so as to place the plate-like particles on the glass substrate. Then, the particles placed on the glass substrate were transferred to an adhesive tape. The resultant tape was embedded in resin, followed by polishing for enabling observation of the polished cross-sectional surface of a plate-like particle. By means of a scanning electron microscope, the particle thickness of the plate-like particle 15b2 for cathode active material according to Example 1 (average of 10 particles whose end surface, i.e. side surface is parallel with viewing screen) was measured to be about 10 µm.

In addition, the porosity of the plate-like particle 15b2 for cathode active material according to Example 1 was measured to be about 4%. Herein, porosity was measured in the following manner: the cross section of the particle was chemically polished using a cross-section sample preparing apparatus (SM-09010 manufactured by JOEL Ltd.), and, from the result of a scanning electron microscopic image processing, porosity was calculated for each of five particles, and the average thereof was calculated as a measured value of porosity.

Further, for the plate-like particle15b2 for cathode active material according to Example 1, the above-mentioned ratio of an observed surface area (β) to a virtual surface area (α), β/α, was measured to about 5. Herein, the virtual surface area (α) and observed surface area (β) were measured in the following manner.

A large number of the plate-like particles were placed on a stage in such a manner as to not overlap one another and such that the particle plate surfaces were in surface contact with the flat plate-like stage, and observed by means of a scanning electron microscope. The particles were set similarly to the above-mentioned thickness measurement of the plate-like particles (the slide glass was replaced with the stage). For a viewing field where 20 to 40 plate-like particles can be observed, total area was calculated by image processing, and the total area was divided by the number of particles to provide a plate area. The sum of the doubled plate area and the product of a periphery length by the particle thickness gave the virtual surface area (α). Herein, the periphery length was determined in the following manner: on the assumption that all particles are in a shape of disc, a virtual radius r was calculated from the above-mentioned plate area, and the periphery length 2πr was calculated using the virtual radius r.

BET specific surface area was measured by means of "FlowSorb III 2305", a product of SHIMADZU CORPORATION (nitrogen was used as absorption gas). The measured value of BET specific area was 0.25 m²/g. In addition, particle volume was calculated by multiplying the previously determined plate area by the particle thickness, and particle weight was calculated by multiplying the particle volume by specific gravity of lithium cobaltate (5.1) and (1 - porosity). Then, by multiplying the BET specific surface area by the particle weight, an observed surface area (β) was calculated. The value of β/α was rounded off to an integer number.

In addition, for the particles of Example 1, the orientations thereof were evaluated by means of an X-ray diffraction (XRD). As a result, the ratio of intensity of diffraction by the (003) plane to intensity of diffraction by the (104) plane, [003]/[104], was 0.3.

XRD (X-ray diffraction) measurement was carried out by the following method: a mixture prepared by adding the LiCoO₂ plate-like particles (0.1 g) to ethanol (2 g) was subjected to dispersion for 30 minutes by means of an ultrasonic dispersing device (ultrasonic cleaner); and the resultant dispersion liquid was spin-coated at 2,000 rpm onto a glass substrate measuring 25 mm x 50 mm so as to prevent overlap of the plate-like particles to the greatest possible extent and to bring crystal faces in parallel with the glass substrate surface. By means of an XRD apparatus (GEIGER FLEX RAD-IB, product of Rigaku Corp.), the surfaces of the plate-like particles were irradiated with X-ray so as to measure an XRD profile, thereby obtaining the ratio of intensity (peak height) of diffraction by the (003) plane to intensity (peak height) of diffraction by the (104) plane, [003]/[104]. In the above-mentioned method, the plate surface of the plate-like particles are in surface contact with the glass substrate surface, so that the particle plate surface is in parallel with the glass substrate surface. Thus, according to the above-mentioned method, there is obtained a profile of diffraction by crystal faces present in parallel with crystal faces of the particle plate surface; i.e., a profile of diffraction by crystal faces oriented in a plate surface direction of a particle.

Further, for the plate-like particle 15b2 for cathode active material according to Example 1, cell characteristics (capacity retention percentage) was evaluated in the following manner. As a result, the capacity retention percentage was very good (98%).

The LiCoO₂ particles, acetylene black, and polyvinylidene fluoride (PVDF) were mixed at a mass ratio of 75 : 20 : 5, thereby preparing a positive-electrode material. The prepared positive-electrode material (0.02 g) was compacted to a disk having a diameter of 20 mm under a pressure of 300 kg/cm², thereby yielding a positive electrode.

The yielded positive electrode, a negative electrode formed from a lithium metal plate, stainless steel collector plates, and a separator were arranged in the order of collector plate-positive electrode-separator-negative electrode-collector plate. The resultant laminate was filled with an electrolytic solution, thereby yielding a coin cell. The electrolytic solution was prepared as follows: ethylene carbonate (EC) and diethyl carbonate (DEC) were mixed at a volume ratio of 1:1 so as to prepare an organic solvent, and LiPF₆ was dissolved in the organic solvent at a concentration of 1 mol/L.

One cycle consists of the following charge and discharge operations: constant-current charge is carried out at 0.1C rate of current until the cell voltage becomes 4.2 V; subsequently, constant-voltage charge is carried out under a current condition of maintaining the cell voltage at 4.2 V, until the current drops to 1/20, followed by 10 minutes rest; and then, constant-current discharge is carried out at 1C rate of current until the cell voltage becomes 3.0 V, followed by 10 minutes rest. A total of three cycles were repeated under a condition of 25°C. The measured value of the discharge capacity in the third cycle was considered to be as a discharge capacity at 1C rate.

Similarly, one cycle consists of the following charge and discharge operations: constant-current charge is carried out at 0.1C rate of current until the cell voltage becomes 4.2 V; subsequently, constant-voltage charge is carried out under a current condition of maintaining the cell voltage at 4.2 V, until the current drops to 1/20, followed by 10 minutes rest; and then, constant-current discharge is carried out at 0.1C rate of current until the cell voltage becomes 3.0 V, followed by 10 minutes rest. A total of three cycles were repeated under a condition of 25°C. The measured value of the discharge capacity in the third cycle was considered to be as a discharge capacity at 0.1C rate.

The capacity retention percentage (%) was defined as a value obtained by dividing the discharge capacity at 1C rate by the discharge capacity at 0.1C rate.

By properly changing process parameters in the lithium introduction step, and whereby modifying the values of BET specific surface area, Samples 1 to 5 were prepared (Sample 4 corresponds to the above-mentioned Example 1).

That is, for Samples 1 and 2, Li₂CO₃ powder was replaced with LiNO₃ (product of Kanto Chemical Co., Inc.) in the lithium introduction step, and the temperature for heat-treatment was 800°C. In addition, the values of Li/Co when adding lithium compound in the lithium introduction step were 1.6, 1.4, 1.2, 1.0, and 1.0 in the order from Sample 1 to Sample 5. The time periods for heat-treatment were 10, 5, 5, 3, and 1 [hour] in the order from Sample 1 to Sample 5.

Further, Samples 6 and 7 with smaller BET specific surface area were prepared in the following manner.

After carrying out the lithium introduction step on the film-like sheet (self-standing film) obtained by the above-described sheet formation step without the crushing process, both surfaces of the yielding LiCoO₂ film were buffed using diamond slurry (manufactured by Marumoto Struers K.K., product name : "DP-Spray", particle size: 1 µm). Thereafter, by washing in ethanol using an ultrasonic washing machine, crushing through a sieve, and further heat-treating in the air at 600°C for one hour in order to recover the disorder of crystallinity due to polishing, the powder according to Samples 6 and 7 were obtained.

By changing the condition for the above-mentioned buffing, different BET values were set for Samples 6 and 7. That is, in Sample 6, buffing was carried out by reciprocating the sample for a distance of 10 to 20 mm, 10 times while lightly pushing the sample on a piece of polishing paper coated with the diamond slurry with a finger. In Sample 7, reciprocation on buffing were 30 to 40 times.

The following Table 1 collectively shows the results of measurements of BET specific surface area, the ratio of an observed surface area (β) to a virtual surface area (α), β/α, and capacity retention percentage for the above-mentioned Samples 1 to 7.

**[Table 1]**

| | BET Specific Surface Area [m²/g] | β/α | Capacity retention percentage [%] |
|---|---|---|---|
| Sample 1 (Comp. Ex.) | 0.55 | 12 | 89 |
| Sample 2 | 0.47 | 10 | 94 |
| Sample 3 | 0.38 | 8 | 96 |
| Sample 4 (Ex. 1: Control) | 0.25 | 5 | 98 |
| Sample 5 | 0.17 | 4 | 97 |
| Sample 6 | 0.12 | 3 | 94 |
| Sample 7 (Comp. Ex.) | 0.08 | 2 | 85 |

As shown in Table 1, in Samples 2 to 6 with β/α in a range of 3 or more and 10 or less, good cell characteristics were obtained.

In addition, also in the cases of different particle thickness (about 2 µm and 30 µm), degree of orientation ([003]/[104] = 0.9), and materials (Li(Ni_{0.75}Co_{0.2}Al_{0.05})O₂, Li(Co,Ni,Mn)O₂), the same results as described above were obtained.

### <Effect of embodiment>

As mentioned above, in the plate-like particle 15b2 for cathode active material according to the present embodiment, the (003) plane is oriented so as to intersect the particle plate surface. In addition, in the plate-like particle 15b2 for cathode active material, when the above-mentioned ratio β/α is 3 or more, asperity which increases the surface area contributing to the intercalation and deintercalation of lithium ions is formed on the plate surface. Thereby, the crystal plane (a plane other than the (003) plane: e.g., the (101) plane and (104) plane) through which lithium ions are favorably intercalated and deintercalated, exposes more to an electrolyte. Thus, characteristics such as cell capacity is improved.

In ordinary plate-like particles for cathode active material (as shown in FIGS. 2B and 2C), reducing the particle size enhances rate characteristic because of an increase in specific surface, but is accompanied by a deterioration in durability due to a deterioration in particle strength, and a reduction in capacity due to an increase in the percentage of a binder. In this manner, in ordinary (conventional) plate-like particles for cathode active material, the rate characteristic is in trade-off relation with durability and capacity.

By contrast, in the plate-like particles for cathode active material of the present embodiment, when durability and capacity are enhanced through an increase in particle size, the total area of those planes through which lithium ions are readily released also increases, so that high rate characteristic is obtained. Thus, according to the present embodiment, capacity, durability, and rate characteristic can be enhanced as compared with conventional counterparts.

Particularly, a lithium ion secondary cell for use in mobile equipment, such as cellphones and notebook-style PCs, is required to provide high capacity for long hours of use. For implementation of high capacity, increasing the filling rate of an active material powder is effective, and the use of large particles having a particle size of 10 µm or greater is preferred in view of good filling performance.

In this regard, according to conventional techniques, an attempt to increase the particle size to 10 µm or greater leads to a plate-like particle in which the (003) planes, through which lithium ions and electrons cannot be intercalated and deintercalated, are exposed at a wide portion of the plate surface of the plate-like particle (see FIG. 2C) for the reason of crystal structure, potentially having an adverse effect on output characteristics.

By contrast, in the plate-like particle for cathode active material of the present embodiment, conductive planes for lithium ions and electrons are widely exposed at the surface of the plate-like particle. Thus, according to the present embodiment, the particle size of the LiCoO₂ plate-like particles can be increased without involvement of adverse effect on output characteristics. Therefore, the present embodiment can provide a positive-electrode material sheet having high capacity and a filling rate higher than that of a conventional counterpart.

The plate-like particle 15b2 for cathode active material have a thickness of preferably 2 µm to 100 µm, more preferably 5 µm to 50 µm, further preferably 5 µm to 20 µm. A thickness in excess of 100 µm is unpreferable in view of deterioration in rate characteristic, and sheet formability. A thickness less than 2 µm is unpreferable in view of the effect of increasing the filling rate being small.

The aspect ratio of the plate-like particle 15b2 for cathode active material is desirably 4 to 20. At an aspect ratio less than 4, the effect of expanding a lithium ion intercalation/deintercalation surface through orientation becomes small. At an aspect ratio in excess of 20, when the plate-like particles 15b2 for cathode active material are filled into the cathode active material layer 15b such that the plate surfaces of the plate-like particles 15b2 for cathode active material are in parallel with an in-plane direction of the cathode active material layer 15b, a lithium ion diffusion path in the thickness direction of the cathode active material layer 15b becomes long, resulting in a deterioration in rate characteristic; thus, the aspect ratio is unpreferable.

### <Modifications>

The above-described embodiment and specific examples are, as mentioned above, mere examples of the best mode of the present invention which the applicant of the present invention contemplated at the time of filing the present application. The above-described embodiment and specific examples should not be construed as limiting the invention.
Various modifications to the above-described embodiment and specific examples are possible, so long as the invention is not modified in essence.

Several modifications will next be exemplified. In the following description of the modifications, component members similar in structure and function to those of the above-described embodiment are denoted by names and reference numerals similar to those of the above-described embodiment. The description of the component members appearing in the above description of the embodiment can be applied as appropriate, so long as no inconsistencies are involved.

Needless to say, even modifications are not limited to those described below. Limitingly construing the present invention based on the above-described embodiment and the following modifications impairs the interests of an applicant (particularly, an applicant who is motivated to file as quickly as possible under the first-to-file system) while unfairly benefiting imitators, and is thus impermissible.

The structure of the above-described embodiment and the structures of the modifications to be described below are entirely or partially applicable in appropriate combination, so long as no technical inconsistencies are involved.

The present invention is not limited to the structure which is specifically disclosed in the description of the above embodiment.

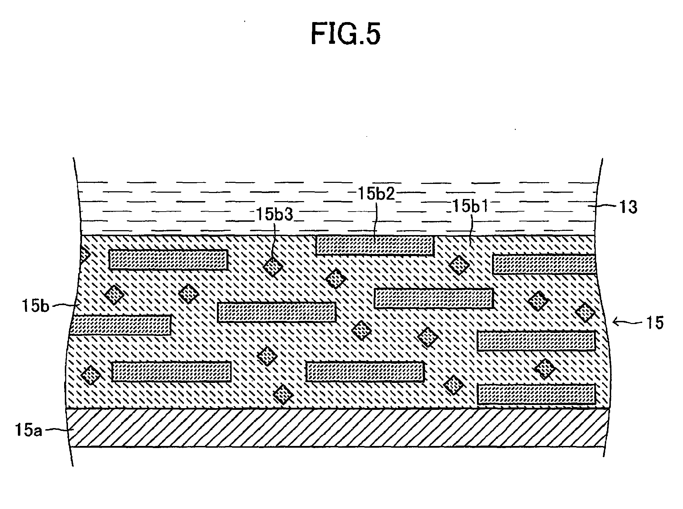

For example, plate-like particles of a plurality of sizes and shapes may be blended as appropriate in the cathode active material layer 15b. As shown in FIG. 5, the plate-like particles 15b2 for cathode active material of the present invention and conventional isometric particles 15b3 may be combined at an appropriate mixing ratio. By means of mixing, at an appropriate mixing ratio, isometric conventional particles 15b3 and the plate-like particles 15b2 for cathode active material having a thickness substantially equivalent to the particle size of the isometric particle, the particles can be efficiently arrayed, whereby the filling rate can be raised.

Material used to form the plate-like particle for cathode active material and the cathode active material film of the present invention is not limited to lithium cobaltate, so long as the material has a layered rock salt structure. For example, the plate-like particle for cathode active material and the cathode active material film of the present invention can be formed from a solid solution which contains nickel, manganese, etc., in addition to cobalt. Specific examples of such a solid solution include lithium nickelate, lithium manganate, lithium nickelate manganate, lithium nickelate cobaltate, lithium cobaltate nickelate manganate, and lithium cobaltate manganate. These materials may contain one or more elements of Mg, Al, Si, Ca, Ti, V, Cr, Fe, Cu, Zn, Ga, Ge, Sr, Y, Zr, Nb, Mo, Ag, Sn, Sb, Te, Ba, Bi, etc.

At a temperature of 920°C or higher, an oxide of Co is phase-transformed from a spinel structure represented by Co₃O₄ at room temperature to a rock salt structure represented by CoO. Meanwhile, Mn and Ni assume a spinel structure represented by Mn₃O₄ and a rock salt structure represented by NiO, respectively, over a wide range of temperature.

Thus, as in the case of Co, a solid solution which contains at least two of Co, Ni, and Mn can be phase-transformed from a spinel structure at low temperature to a rock salt structure at high temperature through control of composition, temperature, atmosphere, pressure, etc.

In this case, there can be yielded, by the following procedure, an LiMO₂ sheet or plate-like particles for cathode active material in which the crystal face, such as (104) and (101), through which lithium ions are favorably intercalated and deintercalated, is oriented in parallel with the plate surface: an independent film-like sheet composed of a large number of (h00)-oriented plate-like M₃O₄ (M includes at least one selected from among Co, Ni, and Mn) grains is formed, and then lithium is introduced into the sheet or pieces obtained by crushing the sheet.

That is, for example, even an Ni-Mn composite oxide, which does not contain Co, assumes a rock salt structure at high temperature and a spinel structure at low temperature as in the case of a Co oxide; thus, the Ni-Mn composite oxide can be used to form an oriented sheet in a manner similar to that mentioned above. By introducing lithium into the thus-formed sheet or pieces obtained by crushing the sheet, there can be manufactured a favorably oriented cathode active material represented by Li(Ni,Mn)O₂.

Alternatively, there can be yielded, by the following procedure, an LiMO₂ sheet or plate-like particles for cathode active material in which the crystal face, such as (104) or (101), through which lithium ions are favorably intercalated and deintercalated, is oriented in parallel with the plate surface: an independent film-like sheet composed of a large number of (h00)-oriented plate-like MO (M includes at least one selected from among Co, Ni, and Mn) grains having a rock salt structure is formed, and then lithium is introduced into the sheet or pieces obtained by crushing the sheet.

Alternatively, an LiMO₂ sheet or plate-like particles for cathode active material in which the crystal face, such as (104) and (101), through which lithium ions are favorably intercalated and deintercalated, is oriented in parallel with the plate surface, can be yielded directly by means of controlling composition, temperature, atmosphere, pressure, additive, etc. when a film-like sheet composed of LiMO₂ (M includes at least one selected from among Co, Ni, and Mn) particles is sintered.

Also, in a cathode active material having an olivine structure as typified by LiFePO₄, b-axis direction ([010] direction) is regarded as the direction of lithium ion conduction. Thus, by means of forming plate-like particles or a film in which ac plane (e.g., the (010) plane) is oriented in parallel with the plate surface, a cathode active material having good performance can be yielded.

### <Another example composition 1: cobalt-nickel system>

There is formed a green sheet which has a thickness of 20 µm or less and contains an NiO powder, a Co₃O₄ powder, and Al₂O₃ powder. The green sheet is atmospherically-sintered at a temperature which falls within a range of 1,000°C to 1,400°C for a predetermined time, thereby yielding an independent film-like sheet composed of a large number of (h00)-oriented plate-like (Ni,Co,Al)O grains. By means of adding additives, such as MnO₂ and ZnO, grain growth is accelerated, resulting in enhancement of (h00) orientation of plate-like crystal grains.

The (h00)-oriented (Ni,Co,Al)O ceramic sheet or particles yielded in the above-mentioned process and lithium nitrate (LiNO₃) are mixed, followed by heating for a predetermined time, whereby lithium is introduced into the sheet or particles. Thus are yielded (104)-oriented Li (Ni_{0.75}Co_{0.2}Al_{0.05})O₂ plate-like particles for cathode active material.

In the above-mentioned examples, a portion of nickel in a cobalt-nickel system is substituted with aluminum. However, the present invention is not limited thereto. Needless to say, the present invention can also be favorably applied to Li(Ni,Co)O₂.

### <Another composition example 2: cobalt-nickel-manganese 3-element system>

There is formed, by the following method, an independent film-like sheet composed of grains oriented such that the (101) or (104) planes are in parallel with the plate surface of grain: a green sheet having a thickness of 100 µm or less is formed by use of an Li(Ni_{1/3}Mn_{1/3}Co_{1/3})O₂ powder, and the green sheet is sintered at a temperature falling within a range of 900°C to 1,200°C for a predetermined time.

The specifics of reason why the process yields oriented grains are not clear. However, an assumed reason is as follows. When the green sheet is sintered, only those particles whose crystal faces having the lowest crystal strain energy are present within the plane of the green sheet selectively undergo in-plane flat (plate-like) grain growth. As a result, there is yielded plate-like crystal grains of Li(Ni_{1/3}Mn_{1/3}Co_{1/3})O₂ which have high aspect ratio and in which particular crystal faces (herein, the (101) and (104) planes) are oriented in parallel with the plate surface.

Herein, the strain energy refers to internal stress in the course of grain growth and stress associated with defect or the like. A layer compound is generally known to have high strain energy.

Both of strain energy and surface energy contribute to selective grain growth (preferred orientation) of grains oriented in a particular direction. The (003) plane is most stable with respect to surface energy, whereas the (101) and (104) planes are stable with respect to strain energy.

At a film thickness of 0.1 µm or less, the ratio of surface to sheet volume is high; thus, selective growth is subjected to surface energy, thereby yielding (003)-plane-oriented grains. Meanwhile, at a film thickness of 0.1 µm or greater, the ratio of surface to sheet volume lowers; thus, selective growth is subjected to strain energy, thereby yielding (101)-plane- and (104)-plane-oriented grains. However, a sheet having a film thickness of 100 µm or greater encounters difficulty in densification. Thus, internal stress is not accumulated in the course of grain growth, so that selective orientation is not confirmed.

At a temperature of 1,000°C or higher, at which grain growth is accelerated, the present material suffers volatilization of lithium and decomposition due to structural instability. Thus, it is important, for example, to excessively increase the lithium content of material for making compensation for volatilizing lithium, to control atmosphere (for example, in sintering within a closed container which contains a lithium compound, such as lithium carbonate) for restraining decomposition, and to perform low-temperature sintering through addition of additives, such as Bi₂O₃ and low-melting-point glass.

The film-like sheet yielded in the above-mentioned sheet formation step is in such a state that the sheet is apt to break at grain boundaries. Thus, the film-like sheet yielded in the above-mentioned sheet formation step is placed on a mesh having a predetermined mesh size, and then a spatula is pressed against the sheet from above, whereby the sheet is crushed into a large number of Li(Ni_{1/3}Mn_{1/3}Co_{1/3})O₂ particles.

Alternatively, plate-like crystal grains of Li(Ni_{1/3}Mn_{1/3}Co_{1/3})O₂ can also be yielded by the following manufacturing method.

There is formed a green sheet which has a thickness of 20 µm or less and contains an NiO powder, an MnCO₃ powder, and a Co₃O₄ powder. The green sheet is sintered in an Ar atmosphere at a temperature which falls within a range of 900°C to 1,300°C for a predetermined time, thereby yielding an independent film-like sheet composed of a large number of (h00)-oriented plate-like (Ni,Mn,Co)₃O₄ grains. In the course of the sintering, (Ni,Mn,Co)₃O₄ having a spinel structure is phase-transformed to (Ni,Mn,Co)O having a rock salt structure through reduction.

At this time, only those particles whose crystal faces having the lowest surface energy are present within the plane of the green sheet selectively undergo in-plane flat (plate-like) grain growth. As a result, sintering the sheet yields plate-like crystal grains of (Ni,Mn,Co)O which have high aspect ratio and in which particular crystal faces (herein, the (h00) planes) are oriented in parallel with the plate surface of the grain.

In the process of temperature lowering, through replacement of the atmosphere within the furnace with an oxygen atmosphere, (Ni,Mn,Co)O is oxidized into (Ni,Mn,Co)₃O₄. At this time, the orientation of (Ni,Mn,Co)O is transferred, thereby yielding plate-like crystal grains of (Ni,Mn,Co)₃O₄ in which particular crystal faces (herein, the (h00) planes) are oriented in parallel with the plate surface of the grain.

In the oxidation from (Ni,Mn,Co)O to (Ni,Mn,Co)₃O₄, the degree of orientation is apt to deteriorate for the following reason: since (Ni,Mn,Co)O and (Ni,Mn,Co)₃O₄ differ greatly in crystal structure and Ni-O, Mn-O, and Co-O interatomic distances, oxidation (i.e., insertion of oxygen atoms) is apt to be accompanied by a disturbance of crystal structure.

Thus, preferably, conditions are selected as appropriate so as to avoid deterioration in the degree of orientation to the greatest possible extent. For example, reducing the temperature-lowering rate, holding at a predetermined temperature, and reducing the partial pressure of oxygen are preferred.

The film-like sheet yielded in the above-mentioned sheet formation step is in such a state that the sheet is apt to break at grain boundaries. Thus, the film-like sheet yielded in the above-mentioned sheet formation step is placed on a mesh having a predetermined mesh size, and then a spatula is pressed against the sheet from above, whereby the sheet is crushed into a large number of (Ni,Mn,Co)₃O₄ particles.

The (h00)-oriented (Ni,Mn,Co)₃O₄ particles yielded in the above-mentioned crushing step and Li₂CO₃ are mixed. The resultant mixture is heated for a predetermined time, whereby lithium is intercalated into the (Ni,Mn,Co)₃O₄ particles. Thus, there is yielded (104)-oriented Li(Ni_{1/3}Mn_{1/3}Co_{1/3})O₂; i.e., the plate-like particles 15b2 for cathode active material.

Although the ratio Li/Co is not limited to 1.0, it falls preferably within a range of 0.9 to 1.2, more preferably within a range of 1.0 to 1.1. Thus, good charge-discharge characteristics can be realized.

For example, by adding Li₂CO₃ powder at Li/Co of more than 1.0 (e.g., 1.2) in the above-described Example 1 and Example 2, or by mixing (Ni,Co,Al)O ceramic sheet with LiNO₃ powder at a large mole fraction Li/(NiCoAl) (e.g., 2.0) in the above-described cobalt-nickel system compositional example, plate-like particles or film of cathode active material having lithium-excess composition can be obtained.

The Li/Co value in the particles or film of cathode active material having lithium-excess composition can be determined by componential analysis using an ICP (Inductively Coupled Plasma) emission spectrophotometer (product name: ULTIMA2, product of HORIBA, Ltd.).

The present invention is not limited to the manufacturing methods disclosed specifically in the description of the above-described embodiment.

For example, the sintering temperature for the green sheet may be a temperature falling within a range of 900°C to 1,300°C. Also, the additive used in the sheet formation step is not limited to Bi₂O₃.

Further, in place of the material particles of Co₃O₄ used in the above-described specific examples, material particles of CoO can be used. In this case, sintering a slurry yields, in a temperature range of 900°C or higher, a (h00)-oriented CoO sheet having a rock salt structure. Oxidizing the CoO sheet, for example, at about 800°C or lower yields a sheet composed of (h00)-oriented Co₃O₄ particles having a spinel structure, the array of Co atoms and O atoms in CoO being partially transferred to the Co₃O₄ particles.

In the lithium introduction step, in place of merely mixing the (h00)-oriented Co₃O₄ particles and Li₂CO₃, followed by heating for a predetermined time, the (h00)-oriented Co₃O₄ particles and Li₂CO₃ may be mixed and heated in flux, such as sodium chloride (melting point: 800°C) or potassium chloride (melting point: 770°C).

Needless to say, those modifications which are not particularly referred to are also encompassed in the technical scope of the present invention, so long as the invention is not modified in essence.

Those components which partially constitute means for solving the problems to be solved by the present invention and are illustrated with respect to operations and functions encompass not only the specific structures disclosed above in the description of the above embodiment and modifications but also any other structures that can implement the operations and functions. Further, the contents (including specifications and drawings) of the prior application and publications cited herein can be incorporated herein as appropriate by reference.

## Claims

1. A plate-like particle for a lithium secondary battery cathode active material, the particle having a layered rock salt structure, **characterized in that**:
a porosity is 10 % or less,
a (003) plane is oriented so as to intersect the plate surfaces, which is a surface normal to the thickness direction of the particle, and
a ratio of an observed surface area (β) determined from a measured value of a BET specific surface area to a virtual surface area (α) of the particle which is defined by the planar shape and thickness of the particle on the assumption that the plate surface is smooth, β/α, is 3 or more and 10 or less.

2. A plate-like particle for a lithium secondary battery cathode active material according to claim 1, wherein, a plane other than the (003) plane is oriented in parallel with the plate surface

3. A plate-like particle for a lithium secondary battery cathode active material according to claim 2, wherein a (104) plane is oriented in parallel with the plate surface, and
the particle has a ratio of intensity of diffraction by the (003) plane to intensity of diffraction by the (104) plane, [003]/[104], as obtained by X-ray diffraction of 1 or less.

4. A plate-like particle for a lithium secondary battery cathode active material according to claim 2 or 3, wherein (h'k'l') planes different from (hkl) planes oriented in parallel with the plate surface are oriented in a plurality of directions.

5. A plate-like particle for a lithium secondary battery cathode active material according to any one of claims 1 to 4, wherein the thickness is 2 µm or more.

6. A lithium secondary battery **characterized by** comprising:
a positive electrode which contains a plate-like particle according to any one of claims 1 to 5 as a cathode active material;
a negative electrode which contains a carbonaceous material or a lithium-occluding material as an anode active material; and
an electrolyte provided so as to intervene between the positive electrode and the negative electrode.
